# EUROPEAN PATENT APPLICATION

(11) **EP 4 624 021 A1**
(43) Date of publication of application: **01.10.2025**
(21) Application number: 24166795.5
(22) Date of filing: 27.03.2024
(51) Int. Cl.: B01D 46/00

(54) **MOUNTING ASSEMBLY FOR A FILTER DEVICE WITH A FIXTURE DEVICE**

(71) Applicant: AAF LTD., Cramlington, Northumberland NE23 8AF (GB)
(72) Inventor: Turnbull, Graeme Denton, Northumberland NE638JQ (GB); Smith, Mark, Whitley Bay NE25 0PU (GB); White, John, Northumberland NE22 7EN (GB)
(74) Representative: Haseltine Lake Kempner LLP

(57) **Abstract**

The present invention relates to a mounting assembly for filter devices comprising a first fixed component and a first filter element mounted to the first fixed component by a fixture device, wherein the fixture device is formed with a hinge.

## Description

### Field of the invention

The present invention relates to a mounting assembly for a filter device comprising a first fixed component, at least one fixture device and a first filter element mounted to the first fixed component by the at least one fixture device.

### Background of the invention

A state-of-the-art filter device is arranged, for example, in front of a gas turbine in order to clean a fluid which is sucked into the gas turbine. Blades are arranged in such gas turbines, which need to be protected against dust, solids, free water and salt. Even if only very small solids enter the gas turbine, huge damage might be caused. Hence, highest demands are applied on the filter device. For this purpose, the filter device contains a mounting assembly. By means of the mounting assembly filter elements, such as the first filter element, are mounted to other components of the filter device, such as the first fixed component. Each of the filter elements has a filter medium held by a frame element. A fluid to be filtered flows through this filter medium and is thereby cleaned.

Replacing components such as filter elements and attaching them to the filter device is often complicated and unhandy.

It is therefore an object of the present invention to improve the mounting assembly and to simplify the mounting of components to the filter device.

### Summary

To achieve the above objects, according to one aspect of the present invention there is provided a mounting assembly for a filter device comprising a first fixed component, at least one fixture device and a first filter element mounted to the first fixed component by the at least one fixture device, wherein the fixture device is formed with a hinge.

A hinge is a mechanical bearing that connects two solid objects, here the first filter element and the first fixed component, allowing a limited angle of rotation between them. The first filter element is thus pivotable around the axis of the hinge. By pivotably fixing the first filter element at the first fixed component, the first filter element may be easily pivoted against and away from the fixed component. Thus, mounting the first filter element is much easier, being divided in two steps a first step of putting in the hinge and a second step of swinging the filter element towards the fixed component. By swinging the filter element towards the fixed component, the filter element may be pressed and sealed against the fixed component. In a first preferred embodiment of such solution according to the invention the first filter element sticks out of a fixing front defined by the first fixed component. Sticking out of the fixing front, the first filter element creates a lever when swinging the filter element at the hinge. The lever is beneficial to create leverage or torque and thereby force the first filter element against the first fixed element. Preferably, at finally mounted position, the first filter element has a first dimension defined in the direction of said fixing front and a second dimension defined in the direction of sticking out of said fixing front. In other words, the second dimension is the length of the filter element from the axis of the hinge till the end surface of the filter element pointing away from the hinge. Thereby the second dimension of the filter element is larger than its first dimension. In particular the second dimension being at least twice the first dimension, and further preferred the second dimension being at least three times the first dimension.

Preferably, a gasket is arranged between the first filter element and the first fixed component. As a result, the first filter element may be pressed with or onto the gasket, resulting in a very tight connection between the first filter element and the filter device. Thereby, the first filter element is easy to install, even with very limited space. Besides, and surprisingly, the risk that the first filter element falls down during mounting and dismounting is considerably reduced, because the first filter element is already held by the hinge, so before the final installation.

Particularly preferred, after final installation the first filter element is also pressed against a mounting element of the filter device, for example a cross member, wherein the gasket is also arranged between the mounting element and the first filter element. As a result, the filter device is sealed particularly well.

In an advantageous improvement of the invention the hinge is formed with a plug-in component. The plug-in component is basically a device for attaching an element without further aids. Here the plug-in component is preferably formed with at least one plug opening and at least one plug element. Thereby, the plug opening is located in a docking plate attached to the first fixed component. The plug element is attached to a docking edge of the first filter element. The docking edge is a vertical outer edge of the first filter element. The first filter element is thus pluggable to the first fixed component by docking the docking edge onto the fixed component. Thus, the hinge according to the invention is formed in a simple and efficient manner.

In a further embodiment of the invention the first fixed component is formed as a second filter element. Thereby, the second filter element is preferably one of several successively arranged filter elements such as the first filter element, which form a filter bank or filter row within the filter device. Due to the use of filter elements themselves as fixed components for mounting further filter elements, no additional fixture assemblies are necessary. As a result, effort and materials, and thus costs are saved.

Preferably, the first filter element is formed with a first frame element having a first hinge spar or tube, and the first fixed component is formed with a second frame element having a second hinge spar or tube, wherein the hinge is arranged at the first hinge spar and the second hinge spar, whereby the hinge spars are preferably formed as vertical spars, in particular vertical side spars of a frame. The spars form a kind of hinge carrier, hinge holder or hinge support at which the respective first filter element and first fixed component are pivotably attached to each other.

The first and the second frame elements are particularly stable parts of the first filter element and the first fixed component, which need to be connected by means of the fixture device. A spar or tube is basically a load-bearing member such as a support column. Thus, the first hinge spar is the bearing member of the first filter element and the second hinge spar is the bearing member of the first fixed component. Using vertical spars, in particular vertical side spars, allows pivoting the first filter element like a standard door. As a result, a stable and functional arrangement to hold and pivot the first filter element is created.

Advantageously, at least two hinges are arranged at the first hinge spar and the second hinge spar. With more than only one hinge, the pivotable connection between the first filter element and the first fixed component is even more stable and reliable.

According to a preferred embodiment of the invention, the mounting assembly further comprises at least one latch and a second fixed component with a third frame element, whereby the first frame element is formed with a first latch spar and the third frame element is formed with a second latch spar, and the at least one latch is arranged at the first latch spar and the second latch spar, whereby the latch spars are preferably formed as vertical spars, in particular vertical side spars.

A latch is basically a mechanical fastener that joins two solid objects. Thus, the latch joins the first filter element with the second fixed component, or more precisely, the first frame element with the third frame element. Both spars are preferably formed as vertical spars, in particular side spars, and are therefore respectively arranged at a third contact surface of the first filter element or a fourth contact surface of the second fixed component. As a result, a stable and functional arrangement for holding or locking the first filter element is created.

Further preferred, at least two latches are arranged at the first latch spar and the second latch spar. With more than only one latch, the connection between the first filter element and the second fixed component is even more stable and reliable.

Besides, the second fixed component is preferably a third filter element. As with said second filter element thereby material and costs are saved.

According to another aspect of the invention the second latch spar is formed with a contact surface facing the first latch spar, whereby the first latch spar is intended to cover this contact surface. The covering of one spar by another spar, provides additional stability and tightness of the mounting assembly. In addition, several surfaces of the filter device are protected, without additional materials or costs.

Alternatively or in addition, the second hinge spar is formed with a contact surface facing the first hinge spar, whereby the first hinge spar is intended to cover this contact surface. The advantages of overlapping or covering spars have already been explained above.

All above mentioned solutions are claimed as well in corresonding methods. Thus, in one exemplary embodiment a method for mounting a filter element to a filter device with a first fixed component, a second fixed component and a gasket is provided, wherein the method comprises the steps: plugging the filter element onto the first fixed component to form a hinge, pivoting the filter element towards the second fixed component, pressing the filter element against the gasket, and fixing the filter element onto the second fixed component. By means of this method, the same advantages are achieved as described above for the mounting assembly.

### Brief description of the drawings

The invention will now be described in greater detail, by way of example, with reference to schematic drawings, in which:
- Fig. 1: is a perspective view of a mounting assembly according to the present invention,
- Fig. 2: is a simplified top view of the mounting assembly according to the present invention with a first filter device in a docked, but not yet mounted position,
- Fig. 3: is a perspective view of detail III in Fig. 1,
- Fig. 4: is a perspective view of detail IV in Fig. 1,
- Fig. 5: is a further perspective view of the mounting assembly in Fig. 1 and
- Fig. 6: is a perspective view of detail VI in Fig. 5.

### Detailed description of the invention

The present invention now will be described more fully hereinafter. This invention may, however, be embodied in many different forms and should not be construed as limited to the embodiments set forth herein; rather, these embodiments are provided so that this disclosure will be thorough and complete, and will fully convey the scope of the invention to those skilled in the art.

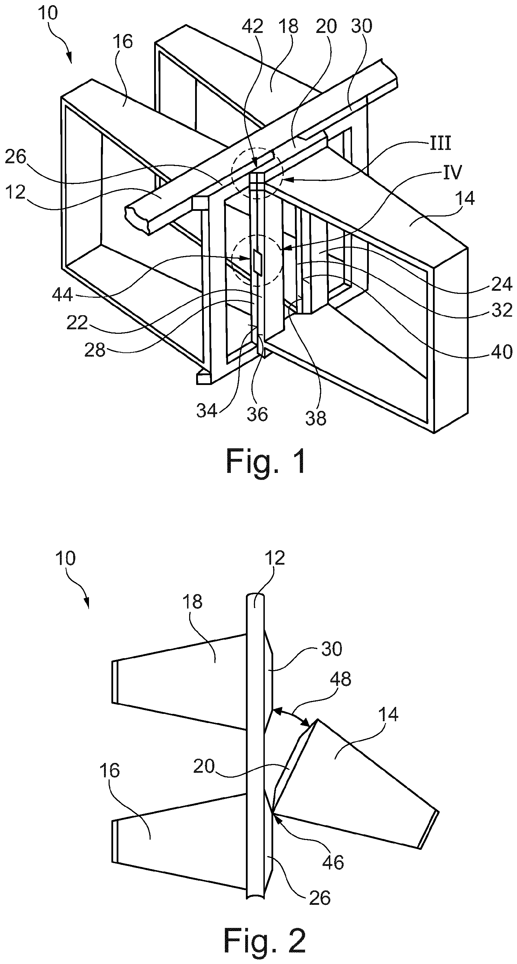

Fig. 1 depicts a mounting assembly 10 in a first embodiment of the invention. To get a complete overview, the mounting assembly 10 is shown by means of a mounting element 12 in a filter device, to which a first filter element 14, a first fixed component 16 and a second fixed component 18 are attached. In this embodiment the fixed components 16, 18 are formed as filter elements. The first filter element 14 is arranged at the mounting element 12 between the two fixed components 16, 18 and extends away from the mounting element 12, but in the opposite direction as the fixed components 16, 18.

The first filter element 14 has a first frame element 20, with a first hinge spar 22 and a first latch spar 24. The first fixed component 16 has a second frame element 26 with a second hinge spar 28, and the second fixed component 18 has a frame element 30 with a second latch spar 32. Thereby, the fixed components 16, 18 engage around the mounting element 12 with their frame elements 26, 30, so that all frame elements 20, 26, 30 are arranged on the same side of the mounting element 12.

The first hinge spar 22 contacts with a first contact surface 34 at a second contact surface 36 of the second hinge spar 28. The first latch spar 24 contacts with a third contact surface 38 at a fourth contact surface 40 of the second latch spar 32.

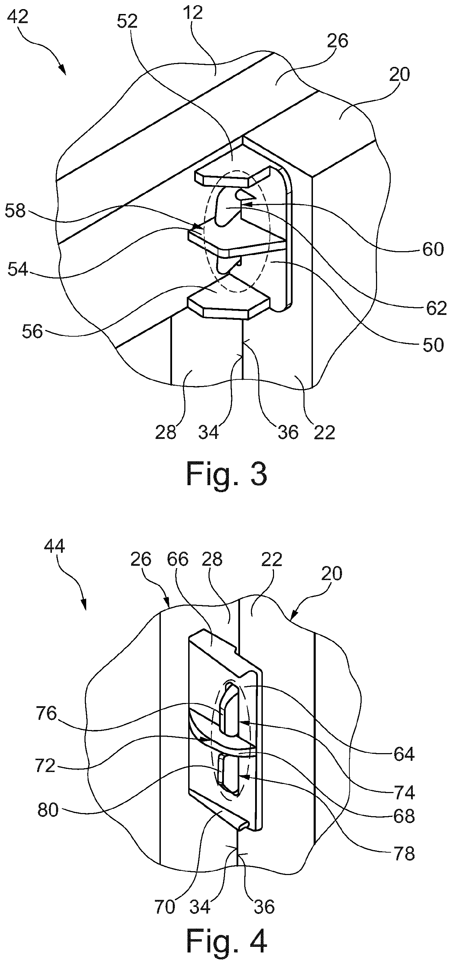

At the first hinge spar 22 and the second hinge spar 28 and on the side facing away from the latch spars 24, 32, a first hinge 42 and a second hinge 44 are arranged. A more detailed insight to the composition of the first hinge 42 is provided by the description of Fig. 3 according to detail III in Fig. 1. Similarly, a more detailed insight to the composition of the second hinge 44 is provided by the description of Fig. 4 according to the detail IV in Fig. 1.

Since the fixed components 16, 18 are formed as filter elements, the following description refer to the first fixed component 16 as the second filter element 16 and to the second fixed component 18 as the third filter element 18.

The first filter element 14 is attached to the second filter element 16 by means of the first hinge 42 and the second hinge 44. Thereby, the first filter element 14 is pivotable by means of these hinges 42, 44, so that the first frame element 20 may be pivoted away from the mounting element 12 and the third filter element 18. The pivoting movement, which serves to mount and dismount the first filter element 14, is explained in more detail in the description of Fig. 2.

Fig. 2 depicts in a simplified representation how the first filter element 14 is to be mounted to the mounting element 12 and the other two filter elements 16, 18. Also here, the first filter element 14 has a first frame element 20, the second filter element 16 has a second frame element 26 and the third filter element 18 has a third frame element 30. Further details on the structure of the filter elements 14, 16, 18, such as contact surfaces and spars, are not shown for sake of simplicity and can be looked up in Fig. 1. The important new detail visible here is the docking edge 46 at the first hinge spar 22, where the first frame element 20 contacts the second frame element 26. In addition, a pivot angle 48 between the first frame element 20 and the third frame element 30 is shown by means of a curved double arrow.

At the docking edge 46, the first filter element 14 with its first frame element 20 has to be applied to the second frame element 26, so that the first filter element 14 is to be applied on the third filter element 18 by rotation with the pivot angle 48 in the direction of the mounting element 12. Then, the first frame element 20 is attachable to the third frame element 30.

Fig. 3 depicts with detail III of Fig. 1 an enlarged view of the first hinge 42. Partly shown are the mounting element 12, the first frame element 20 and the second frame element 26. Also here, the first hinge spar 22 contacts with its first contact surface 34 at the second contact surface 36 of the second hinge spar 28.

To the first frame element 20 a first docking plate 50 is applied, which is held by three support elements, more precisely by a first support element 52, a second support element 54 and a third support element 56. These support elements 52, 54, 56 are attached to the second frame element 26. It is important to mention that the first docking plate 50 is only applied to the first frame element 20, but not attached to this.

The core of the first hinge 42 is the first plug-in component 58 with a first plug opening 60 and a first plug element 62. Thereby, the first plug opening 60 is arranged in the docking plate 50 and extend from the area between the first and the second support elements 52, 54 into the area between the second and the third support elements 54, 56. In addition, the first plug opening 60 protrudes into the second support element 54. The first plug element 62 is attached to the first frame element 20 and fills the first plug opening 60 almost completely.

During mounting, as explained in the description of Fig. 2, the first frame element 20 is to be applied with the first hinge spar 22 to the second frame element 26 along the second hinge spar 28. The first docking plate 50 helps to dock the first frame element 20. Thereby, the first plug element 62, which protrudes from the first frame element 20, has to be inserted into the first plug opening 60. The frame element 20 is now pivotable and may be applied to the second frame element 26 so that the contact surfaces 34, 36 cover each other.

Fig. 4 depicts with detail IV of Fig. 1 an enlarged view of the second hinge 44. Partly shown are the first frame element 20 and its first hinge spar 22 and the second frame element 26 with its second hinge spar 28. Also again, the first contact surface 34 of the first hinge spar 22 contacts the second contact surface 36 of the second hinge spar 28. Attached to the second hinge spar 28 of the second frame element 20 is a second docking plate 64 which extends towards the first frame element 20 so as to be applied to the first hinge spar 22. On the side of the docking plate 64 facing away from the hinge spars 22, 28 three support elements are arranged, more precisely, a fourth support element 66, a fifth support element 68 and a sixth support element 70.

The core of the second hinge 44 is the second plug-in component 72 including a second plug opening 74 for a second plug element 76 and a third plug opening 78 for a third plug element 80. The second plug opening 74 is arranged in the second docking plate 64 between the fourth and the fifth support elements 66, 68, and the third plug opening 78 is arranged in the second docking plate 64 between the fifth and the sixth support elements 68, 70. Thus, the fifth support element 68 is arranged between the plug openings 74, 78. The second and third plug elements 76, 80 are attached to the first frame element 20 and fills the second and third plug openings 74, 78 almost completely.

During mounting, similar to the description of Fig. 3, the first frame element 20 is to be applied with the first hinge spar 22 to the second frame element 26 along the second hinge spar 28. The second docking plate 64 helps to dock the first frame element 20. Thereby, the second and third plug elements 76, 80, which protrudes from the first frame element 20, has to be inserted into the second and third plug openings 74, 78. The frame element 20 is now pivotable and may be applied to the second frame element 26 so that the contact surfaces 34, 36 cover each other.

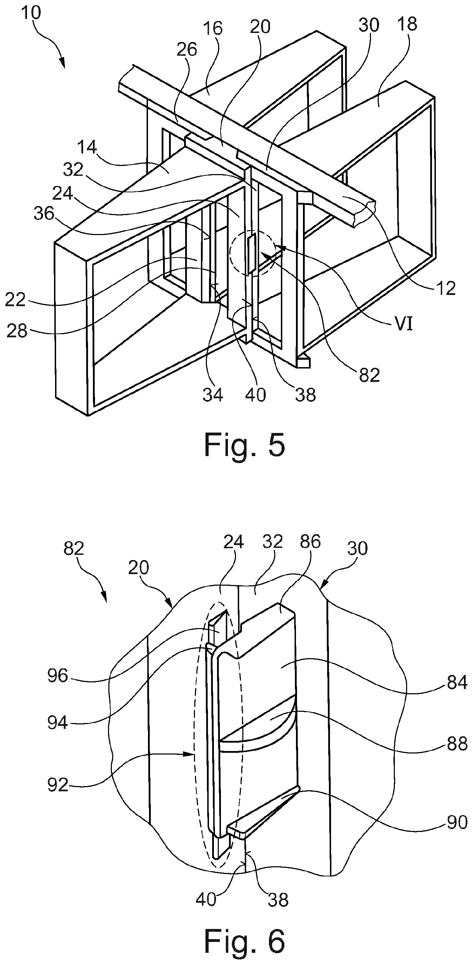

Fig. 5 depicts again the mounting assembly 10 in the first embodiment of the invention as shown in Fig. 1, but viewed from a different perspective. In this view, the second filter element 16 is arranged behind the first and third filter elements 14, 18. Since the structure of the mountain assembly 10 is similar to that in Fig. 1, from the mounting element 12 to the fourth contact surface 40, the description is limited only to the newly visible components.

At the first latch spar 24 and the second latch spar 32 and on the side facing away from the hinge spars 22, 28, a latch 82 is arranged. By means of this latch 82 the first filter element 14 is fixed to the third filter element 18. A more detailed insight to the composition of the latch 82 is provided by the description of Fig.6 according the detail VI in Fig. 5.

Fig. 6 depicts with detail VI of Fig. 5 an enlarged view of the latch 82. Partly shown are the first frame element 20 and its first latch spar 24 and the third frame element 30 with its second latch spar 32. As in Fig. 1 and Fig. 5, the third contact surface 38 of the first latch spar 24 contacts the fourth contact surface 40 of the second latch spar 32. Attached to the second latch spar 32 of the third frame element 30 is a latch plate 84 which extends towards the first frame element 20, so that the latch plate 84 partially covers the first latch spar 24. On the side of the latch plate 84 facing away from the latch spars 24, 32 three support elements are arranged, more precisely, a seventh support element 86, an eighth support element 88 and a ninth support element 90.

The core of the latch 82 is the latching component 92 with a lock element 94 and a hold element 96. Thereby, the lock element 94 is attached to the latch plate 84, more precisely to the outermost edge of a part of the latch plate 84, which partially covers the first latch spar 24. The hold element 96 is attached to the first latch spar 24 and extends along the first latch spar 24, so that the hold element 96 is largely hidden by the latch plate 84. However, the hold element 96 protrudes below the latch plate 84 on the sides where the seventh and ninth support elements 86, 90 are arranged.

During mounting and in a plugged but not mounted status of the mounting assembly 10, as shown in Fig. 2, the first frame element 20 is not applied to the third frame element 30. Thus, the hold element 96 at the first latch spar 24 is not yet partially covered by the latch plate 84. Only when the first frame element 20 is pivoted into the direction of the third frame element 30, the hold element 96 is guided to the latch plate 84, more precisely to the lock element 94. When the first frame element 20 reaches the lock element 94, the lock element 94 is initially applied to the first latch spar 24. The hold element 96 is formed in such a way that upon pressing the hold element 96 against the lock element 94, the latch plate 84 bends and the lock element 94 releases a gap to the first latch spar 24. The hold element 96 is pushed further under the latch plate 84 until the lock element 94 snaps behind the hold element 96.

The previous detailed description has been provided for the purposes of illustration and description. Thus, although there have been described particular embodiments of the present invention of a new and useful mounting assembly, it is not intended that such references be constructed as limitations up-on the scope of this invention except as set forth in the following claims.

### List of reference signs

- 10: mounting assembly
- 12: mounting element
- 14: filter element
- 16: fixed component
- 18: fixed component
- 20: frame element
- 22: hinge spar
- 24: latch spar
- 26: frame element
- 28: hinge spar
- 30: frame element
- 32: latch spar
- 34: contact surface
- 36: contact surface
- 38: contact surface
- 40: contact surface
- 42: hinge
- 44: hinge
- 46: docking edge
- 48: pivot angle
- 50: docking plate
- 52: support element
- 54: support element
- 56: support element
- 58: plug-in component
- 60: plug opening
- 62: plug element
- 64: docking plate
- 66: support element
- 68: support element
- 70: support element
- 72: plug-in component
- 74: plug opening
- 76: plug element
- 78: plug opening
- 80: plug element
- 82: latch
- 84: latch plate
- 86: support element
- 88: support element
- 90: support element
- 92: latching component
- 94: lock element
- 96: hold element

## Claims

1. A mounting assembly (10) for a filter device comprising:
a first fixed component (16), at least one fixture device (42, 44) and a first filter element (14) mounted to the first fixed component (16) by the at least one fixture device (42, 44),
**characterised in that** the fixture device (42, 44) is formed with a hinge.

2. The mounting assembly (10) according to claim 1,
**characterised in that** the hinge (42, 44) is formed with a plug-in component (58, 72).

3. The mounting assembly (10) according to claim 1 or 2,
**characterised in that** the first fixed component (16) is formed as a second filter element.

4. The mounting assembly (10) according to one of claims 1 to 3, **characterised in that** the first filter element (14) is formed with a first frame element (20) having a first hinge spar (22), and the first fixed component (16) is formed with a second frame element (26) having a second hinge spar (28),
wherein the hinge (42, 44) is arranged at the first hinge spar (22) and the second hinge spar (28), whereby the hinge spars (22, 28) are preferably formed as vertical spars.

5. The mounting assembly (10) according to claim 4,
**characterised in that** at least two hinges (42, 44) are arranged at the first hinge spar (22) and the second hinge spar (28).

6. The mounting assembly (10) according to claim 4 or 5,
**characterised in that** the mounting assembly (10) further comprises at least one latch (82) and a second fixed component (18) with a third frame element (30), whereby the first frame element (20) is formed with a first latch spar (24) and the third frame element (30) is formed with a second latch spar (32), and the at least one latch (82) is arranged at the first latch spar (24) and the second latch spar (32), whereby the latch spars (24, 32) are preferably formed as vertical spars.

7. The mounting assembly (10) according to claim 6,
**characterised in that** at least two latches (82) are arranged at the first latch spar (24) and the second latch spar (32).

8. The mounting assembly (10) according to claim 6 or 7,
**characterised in that** the second latch spar (32) is formed with a contact surface (40) facing the first latch spar (24), whereby the first latch spar (24) is intended to cover this contact surface (40).

9. The mounting assembly (10) according to one of claims 4 to 8, **characterised in that** the second hinge spar (28) is formed with a contact surface (36) facing the first hinge spar (22), whereby the first hinge spar (22) is intended to cover this contact surface (36).

10. Method for mounting a filter element (14) to a filter device with a first fixed component (16), a second fixed component (18) and a gasket, wherein the method comprising:
- plugging the filter element (14) onto the first fixed component (16) to form a hinge,
- pivoting the filter element (14) towards the second fixed component (18),
- pressing the filter element (14) against the gasket and
- fixing the filter element (14) onto the second fixed component (18).
